**Europäisches Patentamt**

**European Patent Office**

**Office européen des brevets**

(19)

(11) Veröffentlichungsnummer: **0 064 048**
**A1**

# (12) EUROPÄISCHE PATENTANMELDUNG

(21) Anmeldenummer: **82890058.9**

(22) Anmeldetag: **22.04.82**

(51) Int. Cl.³: **G 05 D 7/01**, F 16 K 1/12

(30) Priorität: **27.04.81 AT 1872/81**

(43) Veröffentlichungstag der Anmeldung: **03.11.82**
**Patentblatt 82/44**

(84) Benannte Vertragsstaaten: **BE CH DE FR IT LI NL SE**

(71) Anmelder: **WAAGNER-BIRO AKTIENGESELLSCHAFT, Stadlauer-Strasse 54, A-1221 Wien (AT)**

(72) Erfinder: **Schrems, Emil, Neustift am Walde 41, A-1190 Wien (AT)**

(74) Vertreter: **Wallner, Gerhard, Dipl.-Ing., Waagner-Birò Aktiengesellschaft Patentreferat Postfach 11, A-1221 Wien (AT)**

(54) **Regelventil, insbesondere Misch- oder Dosierventil.**

(57) Die Erfindung betrifft ein Regelventil zur Steuerung konstanter Durchflussmengen und ein Sicherungsventil für Druckstösse. Das Regelventil umfasst eine venturirohrförmige Düse 2 mit einer Düsennadel 10 mit einem stromaufwärts vorgesehenen Kopf, der als Zylinder 6 mit darin gelagerten Kolben 8 ausgebildet ist. Zylinder 6 und Kolben 8 bilden einen Hohlraum 15, in welchem eine Zug- oder Druckfeder vorgesehen ist. Der Hohlraum 15 ist mit dem Unterdruckgebiet in der Düse 2 über eine absperrbare Rohrleitung 4 verbunden. Durch Strömungsdruck der durch das Regelventil strömenden Flüssigkeit und durch die Federkraft wird der Kolben verschoben und steuert das Regelventil. Diese Regelkraft kann durch eine anströmseitige Öffnung 16 im Zylinder 6 vergrössert werden und kann durch das Steuerventil 5 an den zu steuernden Mengenfluss angepasst werden. Die Genauigkeit der Steuerung lässt sich durch die Hintereinanderschaltung zweier oder mehrerer Regelventile verbessern.

## Regelventil, insbesondere Misch- oder Dosierventil

Die Erfindung betrifft ein Regelventil, insbesondere Misch- oder Dosierventil, zur Steuerung konstanter Durchflußmengen bei wechselndem Flüssigkeitsdruck mit in einer venturiartigen Düse verschiebbar gelagerten, federbelasteten Düsennadel und ein Sicherungsventil für Druckstöße in Rohrleitungen.

Es sind Regelventile mit Düsennadeln bekannt, bei welchen die Düsennadel verstellt wird. Diese Ventile weisen steuerungstechnische und strömungstechnische Nachteile auf, sodaß keine rasche Regelung auf Mengenkonstanz bei geringem Druckverlust, bzw. bei Sicherungsventilen auf Abschaltung, möglich ist.

Die Erfindung hat es sich zur Aufgabe gestellt, den genannten Nachteilen zu begegnen und ist dadurch gekennzeichnet, daß die Düsennadel in einem Zylinder im Strömungskanal über einen Kolben gelagert und geführt ist und daß der Zylinder einen Hohlraum aufweist, in welchem eine Feder vorgesehen ist und von welchem mindestens eine Rohrleitung zur Abströmseite des Ventiles führt.

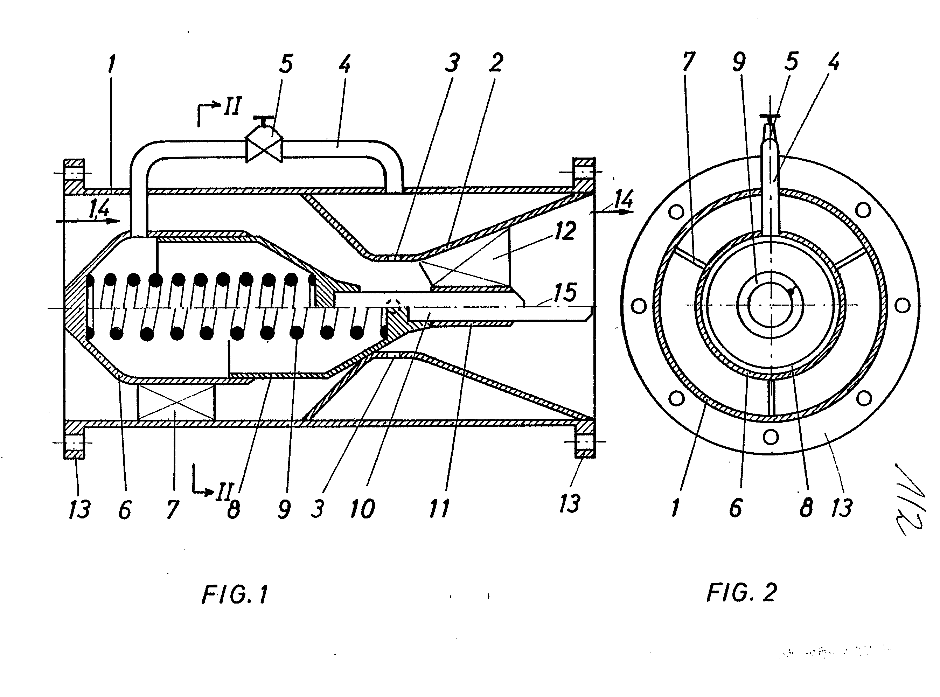

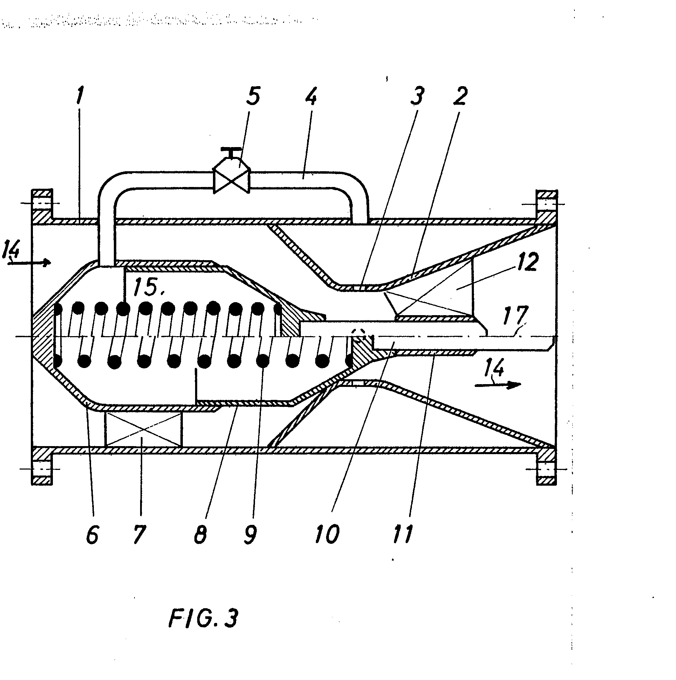

Ein Ausführungsbeispiel der Erfindung ist in der Zeichnung in den Fig. 1-3 erläutert. Es zeigen Fig.1 einen axialen Längsschnitt bei geöffnetem Regelventil Fig.2 einen Querschnitt des Regelventiles gemäß Schnittlinie II in Fig.1 und Fig.3 eine Ausführungsvariante für ein Druckbegrenzungsventil.

Das in einem Gehäuse 1 vorgesehene Regelventil nach Fig.1 und 2 zur automatischen Durchflußsteuerung weist im Strömungskanal eine Düse 2, insbesondere ein Venturirohr, mit an der engsten Stelle vorgesehenen Bohrungen 3 auf, die in eine Ringkammer münden. Von der Ringkammer zwischen dem Gehäuse 1 und der Düse 2 führt eine Rohrleitung 4 mit Steuerventil 5 zu einem Zylinder 6 im Gehäuse 1, welcher mit den Halterungsblechen 7 an diesem befestigt ist. Im Zylinder 6 ist ein Kolben 8 mit der Düsennadel 10 zur Steuerung des Durchflusses reibungsarm verschiebbar geführt. Der Kolben 8 als Teil der Düsennadel 10 ist an seiner zugewandten Seite nach einem Paraboloid geformt, wodurch die Querschnittsänderung in Abhängigkeit der Federkonstante und des Flüssigkeitsdruckes im Hinblick auf die Mengenkonstanz erfolgt. Die Führungshülse 11 für die Düsennadel 10 ist mittels der Halterungsbleche 12 mit der Düse 2 verbunden. Die Düsennadel 10 mit dem Kolben 8 steht unter der Spannung einer Zugfeder 9, welche mit einem Ende am Kolben 8 und dem anderen Ende am Zylinder 6 verbunden ist. An der Anströmseite des Zylinders 6 befindet sich eine Durchströmöffnung 16, die über einen Hohlraum 15 und über die Rohrleitung 4 mit dem Steuerventil 5 Verbindung zur Ringkammer der Düse 2 hat.

Die Wirkungsweise des Regelventiles, welches über die Flansche 13 in einer Rohrleitung eingebaut ist, erklärt sich aus dem Flüssigkeitsdruck im Bereiche der Düse 2, der entsprechend dem offenen Querschnitt die Durchströmmenge bestimmt. Dieser Flüssigkeitsdruck wirkt von außen auf die Düsennadel 10. Im Hohlraum 15 herrscht der Federdruck, der von der Verschiebung der Düsennadel 10 abhängig ist und ein Staudruck abhängig vom Flüssigkeitsdruck und der durch die Rohrleitung 4 abströmenden Flüssigkeitsmenge.

Das Gleichgewicht der Kräfte ist nun einerseits durch den sich über die Durchströmöffnung 16 und die Rohrleitung 4 im Hohlraum 15 einstellenden Druck, andererseits durch die in der Strömung liegende Düsennadel 10 und der Spannung der Zugfeder 9 gegeben. Die Durchströmöffnung 16 hat etwa den gleichen Querschnitt wie die Rohrleitung 4. Durch das Steuerventil 5 ist der Staudruck im Hohlraum 15 des Zylinders 6 einstellbar, wodurch die Mengenkonstanz verändert werden kann. Über die Düse 2 strömt eine bestimmte Flüssigkeitsmenge gemäß Pfeil 14 ab. Ändert sich nun der Flüssigkeitsdruck im Gehäuse 1, so ändert sich im selben Maße auch der auf die Düsennadel 10 wirkende Druck, während die Änderung der zugehörigen inneren Kräfte im Zylinder 6 nicht in derselben Größe zueinander erfolgt. Diese Unterschiedlichkeit ist durch die verschieden großen Querschnitte gegeben, auf welche die einzelnen Drücke wirksam sind. Aus der Unterschiedlichkeit der Kraftänderung ergibt sich nun zwangsläufig, daß zur Erreichung eines neuen Gleichgewichtszustandes sich auch die Federkraft durch Änderung des Federweges ändern muß. Dies bedingt eine Verschiebung des Kolbens 8 der Düsennadel 10 in axialer Richtung, wodurch es zur Änderung des Ringquerschnittes in der Düse 2 und zwar derart kommt, daß trotz Änderung des Druckes die jeweils abströmende Flüssigkeitsmenge konstant bleibt.

Bei geschlossenem Steuerventil 5 herrscht im Zylinderraum der größte Überdruck vor und das Regelventil geht in Schließstellung. Bei ganz geöffnetem Steuerventil 5 wird der im engsten Teil der Düse 2 vorherrschende, stark verminderte Druck über die Bohrungen 3 und die Abströmleitung 4 dem Hohlraum 15 voll mitgeteilt und das Regelventil erreicht seinen größten Öffnungsgrad, da die Zugfeder 9 die Düsennadel 10 zurückzieht und der Ringquerschnitt der Düse zur Gänze freigegeben wird.

Das erfindungsgemäße Regelventil besitzt aber noch eine Eigenschaft als Rohrbruchsicherung, bzw Überdrucksicherung. Wird der Flüssigkeitsdruck, für welchen das Regelventil ausgelegt ist, überschritten, so kann auch die Gleichgewichtsbedingung der Kräfte zueinander nicht mehr erfüllt werden und das Regelventil schließt dann infolge des übermäßig großen Flüssigkeitsdruckes. Dieser Fall wird dann eintreten, wenn z.B. durch Bruch der Rohrleitung unterhalb des Regelventiles der Differenzdruck über das ausgelegte Maß ansteigt. Es läßt sich aus diesem Verhalten die Eigenschaft des Regelventiles als sogenannte Rohrbruchsicherung ableiten.

Zur speziellen Anpassung des Regelventiles an die Aufgabe einer Sicherung nachgeschalteter Rohrstränge, ist in Fig.3 eine Konstruktionsvariante gezeigt, bei der die Durchströmöffnung 16 verschlossen ist und die Zugfeder durch eine Druckfeder ersetzt ist.

Zur Sicherung nachgeschalteter Rohrstränge werden in bekannter Weise zusätzliche Einrichtungen, wie z.B. Überdruckventile oder Drosselventile, verwendet, die durch den Einbau des neuen Gerätes vermieden werden können. Druckstöße entstehen beispielsweise durch Pumpenausfälle. Dabei läuft dem Überdruckstoß ein Unterdruckstoß voraus, der die Rohrleitungen gefährdet. So kann beispielsweise in einer 9 bar Wasserdruckleitung durch Netzausfall bedingten Pumpenstillstand innerhalb von Sekundenbruchteilen der Strömungsdruck infolge der Trägheit der strömenden Flüssigkeit auf Unter-Atmosphärendruck abfallen und anschließend auf 15 bar anschwellen. Auch bei der Zuschaltung von Pumpen treten Druckstöße auf.

Es gelten die Erklärungen zu Fig.1 bis auf die Tatsache, daß zur Durchführung der Sicherungsaufgabe das Steuerventil 5 geschlossen ist. Spricht die Sicherung an, so schließt sich das Regelventil und kann sich selbsttätig nicht mehr öffnen. Der Raum zwischen dem Zylinder 6 und dem Kolben 8 ist über eine Rohrleitung 4 mit der engsten Stelle der Düse 2 verbunden und zwar so, daß bei geschlossenem Ventil 5 der auf dem Verschlußkörper lastende Flüssigkeitsdruck durch Spalten zwischen dem Kolben 8 und dem Zylinder 6 in den Innenraum eindringt und den Anpreßdruck erhöht. Wird das Steuerventil 5 geöffnet, so wird mittels der an das Unterdruckgebiet angeschlossenen Rohrleitung 4 der Flüssigkeitsdruck an der Unterseite des Kolbens 8 vermindert und an den Flüssigkeitsdruck an der Verschlußkörperunterseite angepaßt, wodurch der Differenzdruck eine Öffnung des Verschlußkörpers entgegen des Federdruckes bewirkt.

Im oberen Teil der Fig.3 ist das Regelventil in der Offenstellung bzw. in einer Regelstellung gezeichnet, während im unteren Teil der Fig.3 das Regelventil in der Schließstellung dargestellt ist. Das Schließen des Regelventiles erfolgt bei Druckabfall in der Strömung in dem der Federdruck gegenüber dem Flüssigkeitsdruck zunimmt und die Verstellbewegung des Verschlußkörpers bewirkt.

Während der Durchströmöffnung des Regelventiles bzw. der Düse 2 stellt sich im engsten Querschnitt der Düse ein Strömungsdruck ein der im Zusammenwirken mit dem Federdruck der Feder 9 eine gegen Druckschwankungen empfindliche Regelstellung der Düsennadel 10 bewirkt. Druckabfälle wirken in Richtung der Schließung des Regelventiles bzw. drosseln den Durchfluß. Die Schließzeiten sind gering, sodaß Unterdruckstöße zu 80 % vermindert werden können. Durch die Anordnung mehrerer derartiger Regelventile hintereinander läßt sich dieser Wert weiter senken.

Diese Regelventile haben naturgemäß einen vorgegebenen Druckbereich. Um diesen zu erhöhen, kann die Anpreßkraft der Feder 9 von außen durch ein nicht dargestelltes Handrad verändert werden, indem die Angriffsfläche der Feder 9 im Zylinder, der im Gehäuse 1 ortsfest angeordnet ist, in Richtung der Ventilachse 17 verschoben wird. Die Profilierung der Düsennadel erfolgt zweckmäßig so, daß die Düse einer ringförmigen Venturidüse entspricht und die Strömungsverluste dadurch verkleinert werden. Im Rahmen der Erfindung ist es auch möglich die Schließstellung des Regelventiles durch eine maximale Drosselstellung mittels eines Anschlages zu ersetzen und dadurch die Öffnung des Regelventiles in die normale Betriebsstellung zu vereinfachen und gegebenenfalls zu automatisieren.

Patentansprüche:

1. Regelventil, insbesondere Misch- oder Dosierventil, zur Steuerung konstanter Durchflußmengen bei wechselndem Flüssigkeitsdruck mit in einer venturiartigen Düse verschiebbar gelagerten, federbelasteten Düsennadel und Sicherungsventil für Druckstöße in Rohrleitungen, dadurch gekennzeichnet, daß die Düsennadel (10) in einem Zylinder (6) im Strömungskanal über einen Kolben (8) gelagert und geführt ist und daß der Zylinder (6) einen Hohlraum (15) aufweist, in welchem eine Feder (9) vorgesehen ist und von welchem mindestens eine Rohrleitung (4) zur Abströmseite des Regelventiles führt.

2. Regelventil nach Anspruch 1, dadurch gekennzeichnet, daß der Zylinder (6) an seiner Anströmseite eine Durchströmöffnung (16) in den Hohlraum (15) aufweist.

3. Regelventil nach Anspruch 2, dadurch gekennzeichnet, daß die Rohrleitung (4) etwa den gleichen Querschnitt wie die Durchströmöffnung (16) aufweist.

4. Regelventil nach Anspruch 1, dadurch gekennzeichnet, daß die Rohrleitung (4) außerhalb des Ventiles angeordnet ist und ein Steuerventil (5) aufweist, sowie an der engsten Stelle der mit Bohrungen (3) versehenen Düse (2) als Steuerleitung wieder in den Strömungskanal des Regelventiles mündet.

5. Regelventil nach Anspruch 1, dadurch gekennzeichnet, daß die Feder (9) als Zugfeder zwischen dem Zylinder (6) und dem Kolben (8) ausgebildet ist.

6. Regelventil nach Anspruch 1, dadurch gekennzeichnet, daß der Kolben (8) an seiner der Flüssigkeit zugewandten Außenseite eine parabolische Oberfläche und ein zylindrisches Führungsstück aufweist.

7. Regelventil nach Anspruch 1, dadurch gekennzeichnet, daß die Düsennadel (10) entsprechend dem Düsenlängsschnitt profiliert gegen den Flüssigkeitsdruck in eine Schließstellung bringbar und außerhalb des Zylinders (6) im Bereich des Düseneintrittes in einer Führungshülse (11) gehalten ist.

8. Regelventil nach Anspruch 1, dadurch gekennzeichnet, daß der geschlossene Raum (15) zwischen dem Zylinder (6) und dem Kolben (8) über eine Rohrleitung (4) mit der engsten Stelle der als Venturirohr mit ringförmigem Strömungsquerschnitt ausgebildeten Düse (2) verbunden ist.

9. Regelventil nach Anspruch 1, dadurch gekennzeichnet, daß die Feder (9) zwischen dem Kolben (8) und dem Zylinder (6) einstellbar angeordnet und als Druckfeder ausgebildet ist.

10. Regelventil nach Anspruch 1, dadurch gekennzeichnet, daß der Spalt zwischen der Düse (2) und der Düsennadel (10) durch den Druck der Feder (9) und durch den auf die Düsennadel 10 wirkenden Flüssigkeitsdruck einerseits und andererseits den durch die Strömungsgeschwindigkeit im engsten Querschnitt der Düse (2) auftretenden Unterdruck regelbar ist.

0064048

112

FIG. 2

FIG. 1

2/2

FIG.3

Europäisches
Patentamt

**EUROPÄISCHER RECHERCHENBERICHT**

Nummer der Anmeldung

EP 82 89 0058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 704 048 (GAZ DE FRANCE) <br> * Seite 1, Anspruch 1; Seite 14, Zeile 11 - Seite 16, Zeile 25; Figur 1 * | 1-4,9 | G 05 D 7/01 <br> F 16 K 1/12 |
| Y | US-A-3 002 524 (F.W. DIESING et al.) <br> * Spalte 1, Zeile 9 - Spalte 3, Zeile 16; Figur * | 1-4,9 | |
| A | GB-A-1 136 093 (ROTAX) <br> * Seite 1, Zeile 60 - Seite 2, Zeile 35; Figur 1 * | 1-4 | |
| A | GB-A- 908 891 (NATIONAL RESEARCH DEVELOPMENT CORP.) <br> * Titel; Seite 1, Zeile 63 - Seite 2, Zeile 5; Figur 1 * | 1,2,4, 8,9, | − |
| A | DE-A-2 821 255 (MACHINEFABRIEK MOKVELD) <br> * Seite 1, Anspruch 1; Figur * | 1,2,4, 8,9 | **RECHERCHIERTE SACHGEBIETE (Int. Cl. ³)** <br><br> G 05 D 7/00 <br> F 16 K 1/00 |
| A | DE-A-2 134 984 (GOK REGLER UND ARMATUREN) <br> * Titel; Seite 5, Zeile 20 - Seite 8, Zeile 17; Figur 1 * | 1,4,8, 9 | |

Der vorliegende Recherchenbericht wurde für alle Patentansprüche erstellt.

| Recherchenort | Abschlußdatum der Recherche | Prüfer |
|---|---|---|
| DEN HAAG | 04-08-1982 | POINT A.G.F. |